# EUROPEAN PATENT SPECIFICATION

(11) **EP 2 236 034 B1**
(45) Date of publication and mention of the grant of the patent: **27.05.2015**
(21) Application number: 10158856.4
(22) Date of filing: 10.05.2004
(51) Int. Cl.: A01N 59/00, A01N 59/02, A01P 1/00, C02F 1/76, A01N 25/02

(54) **Method of preparing a bromide- and chloride-containing liquid**
Verfahren zur Herstellung einer bromid- und chloridhaltigen Flüssigkeit
Procédé de préparation de liquide contenant du bromure et de chlorure

(43) Date of publication of application: 06.10.2010
(62) Divisional of application: 04822042.0
(73) Proprietor: Enviro Tech Chemical Services Inc., Modesto, CA 95358 (US)
(72) Inventor: Howarth, Jonathan, N., Modesto, CA 95355 (US); Harvey, Michael, S., Modesto, CA 95358 (US)
(74) Representative: Tomkinson, Alexandra

(56) References cited:
- WO-A1-00/64819
- WO-A1-99/62339
- WO-A1-03/011347
- WO-A1-03/093171
- WO-A1-2004/026770

## Description

### BACKGROUND OF THE INVENTION

### Field of the Invention

The invention relates to methods for the preparation of concentrated aqueous bromine solutions and high activity bromine-containing solids using elemental bromine or bromine chloride. The products are used as microbiocides in water treatment.

### Description of the Related Art

Single feed bromine biocide solutions are available from a number of sources and many methods to manufacture these products have been reported. These methods fit into two general categories: those that employ sodium hypochlorite solutions with a source of bromine ion, and those that employ elemental bromine or bromine chloride.

The prior art methods that use a sodium hypochlorite solution with a source of bromine ion yield a stabilized solution with a maximum active ingredient concentration of 14% as Br₂ (6.4% as Cl₂). For example, U.S. patent nos. 5,683,654, 5,795,487, 5,942,126, and 6,136,205 all describe a method to manufacture single feed, liquid bromine biocide by mixing an aqueous hypochlorite solution with bromine ion sources followed by introduction of a stabilizer agent. The method requires a complex two-vessel reaction. In the first step, NaBr and NaOCl solutions were mixed and sufficient time was allowed to permit the formation of a sodium hypobromite (NaOBr) solution. In the second step, this was then introduced to a solution of the stabilizer agent maintained at 50°C. The disadvantage of this method is that the concentration of the stabilized bromine product is limited by the concentration of NaOCl bleach that is commercially available. In fact, despite using the highest strength grade of industrial NaOCl bleach, the bromine content of the resulting stabilized liquid bromine solution was only about 14% as Br₂ (6.4% as Cl₂).

The prior art method that uses elemental bromine or bromine chloride yields a solution with a higher active ingredient concentration that the method that uses a sodium hypochlorite solution with a source of bromine ion. Moore, *et al.* overcame the complexity of the two-vessel reaction in U.S. patent nos. 6,068,861, 6,495,169, and 6,322,822 and disclosed a single-vessel reaction in which bromine or bromine chloride was added to a halogen stabilizer solution under conditions of pH control. These three patents disclosed two solutions (described in examples 4 and 5 of the '169 and '861 patents) having an active ingredient concentration of at least 19.6% as Br₂ (8.7% as Cl₂). However, no elevated temperature, chemical, or physical stability data was reported for either solution, and the present inventors have concluded that these two solutions are either unstable or have inferior stability.

The solution disclosed in example 5 of the '169 and '861 patents was reported to contain up to 26.7% as Br₂ (11.5% as Cl₂), but it had a pH of 7.0 and possessed a distinct bromine odor. It is well known that these types of solutions undergo acid-generating decomposition reactions upon storage. Thus, as the pH dropped below 7.0, highly toxic bromine vapours would have fumed from the solution and appeared as an orange/brown gas in the headspace of the container. This demonstrates that the solution of example 5 was physically unstable, and therefore, unacceptable for its intended use. The solution discloses in example 4 of the '169 and '861 patents was reported to contain 19.6% as Br₂ (8.7% as Cl₂), with a pH of 13.0 and no odor of bromine. However, it has been concluded, as will be shown herein, that this solution has inferior chemical and physical stability.

Moreover, when the method using elemental bromine or bromine chloride was scaled up, as disclosed in U.S. patent nos. 6,306,441, 6,352,725 and 6,348,219, the hypothetical maximum active ingredient concentration was reported to be 18% as Br₂ (8% as Cl₂). Subsequently, in U.S. patent nos. 6,506,418, 6,511,682 and 6,652,889, Moore, et al reduced this ceiling even further to 14.5%-16% as Br₂ (6.4-7.1% as Cl₂) and required the adjustment of the pH to greater than 10 in order to produce a useful product. The '481 patent, in example 2, described the maximum strength solution as one containing 14.8% as Br₂ (6.59% as Cl₂).

Published application WO 03/093171 disclosed a method for preparing a stabilized bromine solution with a halogen content higher than any previously reported solution prepared from hypochlorite and sodium bromine. Example 1 of WO 03/093171 described a cumbersome multi-step method. In the first step, an unstabilized solution of sodium hypobromite was made by adding elemental bromine to a sodium hydroxide solution and allowing the mixture to react. Introducing a solution of sodium sulfamate prepared by reacting sulfamic acid with a solution of sodium hydroxide followed this. The resulting product was determined to possess a halogen content of 19.6% as Br₂ (8.7% as Cl₂). Example 4 of the same application disclosed an even more complex multi-step method for preparing a solution reported to have a halogen concentration of 21.6% as Br₂ (9.6% asCl₂. However, it appears to the present inventors that this concentration is erroneous because the maximum concentration that can be obtained from the stated quantities of the components (even assuming a 100% yield in every step), is calculated to be 19.7% as Br₂ (8.7% as Cl₂). In actuality, the concentration that was obtained was probably substantially less than 19.7% as Br₂ (8.7% as Cl₂), because it is well-known that the first step cannot proceed with a 100% yield.

The prior art also discloses that other methods also fail to yield satisfactory products in terms of higher active ingredient concentration, physical stability, and reaction efficiency. For example, Moore described a method in U.S. patent nos. 6,375,991 and 6,551,624 that used gaseous chlorine and a source of bromine ion. The reactions conditions sought the preparation of a solution possessing a theoretical bromine content of 16.8% as Br₂ (7.45% as Cl₂), but the actual amount reported was 10.4% as Br₂ (4.6% as Cl₂), corresponding to a yield of 66%. In addition, the resulting solution was stated to be physically unstable as sodium chloride salt precipitated from the aqueous phase towards the end of the reaction. Similarly, Yang *et al.* reported an identical phenomenon in U.S. patent no. 6,270,722.

Thus the prior art teaches that convenient, efficient, scalable methods for preparing chemically and physically stable, liquid bromine-containing solutions will result in a product with a active ingredient concentration of 18% as Br₂ (8% as Cl₂) at the maximum.

Liquid bromine products that contain a higher level of active ingredient have significant economic advantages over more dilute products because a smaller amount of a more concentrated product can be used to achieve the equivalent dose of a weaker product. Also, or concentrated products need to be replaced less frequently than dilute products, and have reduced packaging, storage, and transportation costs per unit weight of active ingredient.

To be commercially viable, products with a high level of active ingredient must have two attributes. First, they must be chemically stable, i.e. they should maintain high activity for extended periods of time and not decompose quickly. Second, they must be physically stable, i.e. they must not emit dangerous fumes or precipitate or crystallize into solid salts that could plug pipe work and make the feeding of liquid materials grind to a halt.

Therefore, a need exists for methods of manufacturing liquid biocidal bromine solutions of enhanced chemical and physical stability that have a concentration of active ingredient greater than 18% as Br₂ (8% as Cl₂) and that conveniently employ elemental bromine or bromine chloride and a solution of sodium sulfamate. This invention addresses that need.

There is also a need for a method of producing a solid, high-activity bromine-containing biocidal composition that is stable and fast dissolving. There are several solid, high-activity bromine-releasing compounds that are sold commercially as biocidal products. There are generally available as heterocyclic organic compounds to which an oxidizing bromine is covalently bonded to a nitrogen atom on the ring. Examples include N,N'bromochloro-5,5-dimethylhydrantoin, 1,3-dibromo-5,5-dimethylhydantoin, and mixtures of these compounds with various other compounds. In water, these materials hydrolyze to release hypobromous acid, which is the biocidal agent. However, a major limitation of these solid compounds is that they are only sparingly soluble in water. Indeed, N,N'bromochloro-5,5-dimethylhydantoin has a water solubility of only 0.1% at 20°C. As a result, bromine is released very slowly from these products as they dissolve. This is a significant disadvantage when the water requires treatment with a high, rapid dose of biocidal bromine, for example, in shock and slug dosing procedures. The low solubility of these products also preludes application where there is insufficient water available to dissolve enough of the solid to deliver a biocidally-effective dose. This invention addresses those needs.

### SUMMARY OF THE INVENTION

The present invention is directed to convenient methods of preparing highly concentrated mixed halogen liquid bromine and chlorine-containing solutions having excellent physical and chemical stability.

In a first aspect of the present invention, there is provided a method of preparing a bromine- and chlorine-containing liquid, comprising: (a) combining solid sulfamic acid, water, and a first alkaline source to form a solution of the salt of sulfamic acid, wherein said alkaline source is selected from the group consisting of alkali metal hydroxide and earth alkali metal hydroxide; (b) adding elemental bromine to said solution, releasing bromide ions into said solution; (c) adding a sufficient amount of a solid organic chlorinating agent to said solution to oxidise all of said bromide ions into bromine and to release soluble chlorine into said solution; (d) conducting a solid-liquid separation; (e) adding a second alkaline source, wherein said alkaline source is selected from the group consisting of alkali metal hydroxide and earth alkali metal hydroxide; and (f) forming a bromine- and chlorine-containing liquid, wherein the amounts of said solid sulfamic acid, water, first and second alkaline sources, and elemental bromine are such that said bromine- and chlorine-containing liquid has an active ingredient concentration of greater than 18% expressed as bromine or 8% expressed as chlorine, and further, wherein said bromine- and chlorine-containing liquid has a mole ratio of said sulfamic acid to available halogen provided by said elemental bromine added in step (b) and said solid organic chlorinating agent added in step (c) of between about 0.95:1 and about 1.2:1.

In one embodiment, the method further comprises, after step (e), conducting a second solid-liquid separation.

In one embodiment, the mole ratio of hydroxide ion to sulfamic acid is between about 1.2:1 and about 1.8:1.

In one embodiment, in step (a), said solid sulfamic acid is first dispersed in said water, followed by the addition of said first alkaline source.

In one embodiment, said organic chlorinating agent is selected from the group consisting of trichloroisocyanuric acid, sodium dichloroisocyanurate, sodium dichloroisocyanurate dihydrate, potassium dichloroisocyanurate, dichloioisocyanuric acid, trichloromelamine, N-chloro-p-toluenesulfonamide, N-chloromethanesulfonamide, N-chlorosuccinimide, N,N'-1,3-bromochloro-5,5-dimethylhydantoin, N,N'-1,3-bromochloro-5-ethyl-5-methylhydantoin, and 1,3-dichloro-5,5-dimethylhydantoin.

In a further aspect of the present invention, there is provided a bromine- and chlorine-containing liquid having an active ingredient concentration of greater than 18% when expressed as bromine or 8% expressed as chlorine, obtainable by the method described above.

Contrary to the teachings of the prior art, the present invention discloses methods in which elemental bromine or bromine chloride is introduced to a sulfamate solution to yield a final solution having a concentration of active ingredient in excess of 18% as Br₂ (8% as Cl₂). The methods of the present invention also yield a final solution having a mole ratio of hydroxide ion to hydrogen ion source (e.g. sulfamic acid plus Br₂ or BrCl) of greater than 1.62:1. In this context, the hydrogen ion source is defined as being the sum of the reagents that dissociate into strong acids in water, e.g. sulfamic acid or other acidic stabilizer plus Br₂ or BrCl. The present inventors have discovered that calculating this mole ratio is a more accurate way of determining the amount of hydroxide ion to use to obtain a final solution of high concentration, than the methods used by the prior art. The prior art methods use a pH measurement, and teach that the amount of hydroxide ion that should be added is the amount necessary to raise the pH to about 13. It is believed, however, that this method is unreliable because under conditions of high pH, glass electrodes suffer a phenomenon known as "alkaline error". The low activity of H⁺ ions in solution means that the electrode responds instead to the much higher concentration of Na⁺ ions, resulting in a pH measurement that is artificially low.

The methods of the present invention do not rely on a pH measurement, but rely instead on the mole ratio of hydroxide ion to hydrogen ion source. Utilizing this approach, it was unexpectedly discovered that this ratio is of critical importance to the chemical and physical stability of the finished product. Nowhere in the prior art is this mole ratio discussed. However, the present inventors have calculated the mole ratio for several of the solutions produced by introducing elemental bromine or BrCl to a solution of sodium sulfamate that have been disclosed in the prior art and found them all to be less than or equal to 1.62:1. For instance, in example 5 of U.S. 6,068,861 it was calculated that the method employed a hydroxide ion source (sulfamic acid plus Br₂) mole ratio of 1:1 and obtained a product that had a measured pH of 7. Example 4 of the same patent described a solution containing 1936% as Br₂ (8.7% as Cl₂) that utilized a hydroxide ion to hydrogen ion source (sulfamic acid plus Br₂) mole ratio of 1.62:1. This solution has a measured pH of 13.0. No elevated temperature, chemical, or physical stability data was reported for either of these solutions. Example 2 of U.S. 6,506,418 described a method involving the addition of both Br₂ and Cl₂ to a solution of sodium sulfamate to a maximum strength solution of 14.8% as Br₂ (6.59% as Cl₂). Again, this utilized a hydroxide ion to hydrogen ion source (sulfamic acid plus Br₂ plus Cl₂) mole ratio of 1.62:1. Thus, solutions produced using the introduction of Br₂ or BrCl to a solution of sodium sulfamate that have a mole ratio of hydroxide ion to hydrogen ion source greater than 1.62:1 have not been previously reported. As will be subsequently demonstrated, such solutions display dramatically enhanced chemical and physical stability over those in which the mole ratio is less then or equal to 1.62:1.

The products of the methods of this invention are sources of oxidizing bromine that are useful for microbiological control in aqueous systems. This is generally achieved by introducing the products into water requiring microbiological control in an amount sufficiently to be biocidally effective. Applications include industrial water systems such as recirculating cooling water, once-through cooling water, air-washer systems, decorative fountains, oil field injection water, oil well completion fluids, municipal and industrial wastewater, brewery pasteurizing water, hydrostatic sterilizer cooling water, pulp and paper processing water, and agricultural irrigation water. Other applications include residential water systems where the home consumer can apply the compositions in aqueous systems where microbiological control is necessary, such as pool and spa water, kitchen and bathroom rinses, toilet bowl rinses, and mold and fungus sprays for inside and outside the home.

The embodiment of the invention is a method for preparing highly concentrated mixed halogen solutions that contain both bromine and chlorine. The method utilizes elemental bromine in conjunction with a solid organic or inorganic chlorinating agent. The method yields solutions that have excellent chemical and physical stability, and possess total halogen concentrations of at least 11.25% when expressed by Br₂ (5% when expressed as Cl₂). Using this method, it is possible to prepare such solutions having concentrations to total halogen that are greater then 22.7% when expressed by Br₂ (10.1% when expressed as Cl₂). Physical and chemical stabilization of the solutions is achieved using a hydroxide ion to hydrogen ion source (e.g. sulfamic acid plus Br₂) mole ratio of at least 1.9:1.

A major benefit of the method is that all of the Br moieties introduced to the reactor as elemental bromine materialize as active bromine in the final product. None of the Br moieties are wasted as by-product inactive bromine ion salts. The solid organic or inorganic halogenating agents serve to reactivate the bromine ions to ensure that both bromine atoms of the Br₂ molecule are utilized as active forms in the products.

A noteworthy feature of the method of the present invention is that it provides stable aqueous mixed halogen bromine and chlorine-containing compositions that contain significantly lower amounts of contaminant halide ion salts than the methods of the prior art which only yield all-bromine products. The method of the third embodiment results in a mixed halogen liquid composition with a far lower level of halide ion contaminant per mole of active halogen. Thus, this method yields a product in which halide ion-induced physical and chemical destabilization is significantly reduced. Assuming a 100% reaction yield, Table II compares the ratio of inactive, soluble halide ion (X⁻) to active halogen in the final product when various alternative reagents are used.

**Table II**

| Reagent | Moles dissolved X⁻ ion/mole stabilized active bromine |
|---|---|
| Bτ₂ | 1 |
| BrCl | 1 |
| Br₂ + Cl₂ | 1 |
| N_{A}OCl + NaBr | 2 |
| Cl₂ + NaBr | 2 |
| Third embodiment | <0.5* |

| | |
|---|---|
| *the exact amount depends on the desired mole ratio of bromine:chlorine in the finished product. | |

The data in Table II helps explain why the method of this embodiment yields physically stable, highly concentrated mixed halogen liquid formulations that are not possible by any other route. Because the aqueous phase is far lower in contaminant halide ion salts, it is able to support the dissolution of higher levels of active ingredient without "salting out".

A significant advantage of the methods of the present application is that it uses solid halogenating agents. Because solid halogenating agents are devoid of water, the halogen content of the finished compositions is not diluted as would be the case if hypochlorite solutions were used to accomplish the same chemical reaction. Further, these solid halogenating agents are generally high in available halogen and do not contain large amounts of extraneous salts or inactive ingredients that enter the finished product (see, for example, WO 03/093171). Hence, the compositions that are obtained using solid halogenating agents possess lower levels of water, as well as lower levels of dissolved salts or other extraneous materials, which would otherwise dilute the available halogen content of the product and adversely impact its chemical and physical stability.

Another remarkable benefit of this invention is that the method makes possible the formation of highly concentrated liquid bromine- containing compositions employing methods that generate no solid wastes. Thus, using solid organic halogenating reagents such as trichloroisocyanuric acid (TCCA) (also known as trichloro-s-triazinetrione), sodium dichlorisocyanurate (NaDDC) (also known as sodium dichloro-s-triazinetrione), sodium dichlorisocyanurate dehydrate (NaDCC.2H₂O) (also known as sodium dichloro-s-triazinetrione dihydrate), potassium dichlorisocyanurate, or dichlorisocyanuric acid, the by-product of the halogenation reaction is cyanuric acid (CA). This is insoluble in the reaction medium and precipitates in the solid form. Upon filtration and washing, highly purified CA wetcake is recovered. This can be recycled to other methods to make additional quantities of TCCA, NaDCC, or NaDCC.2H₂O that can be used in the methods of this invention.

### DETAILED DESCRIPTION OF THE INVENTION

A specific embodiment of the present invention is a method for preparing a highly concentrated mixed halogen solution that contains both bromine and chlorine. The method utilizes elemental bromine in conjunction with a solid organic or inorganic chlorinating agent. This light golden-coloured composition contains 46-60% more available halogen that the all-bromine solutions that are currently available commercially. A typical reaction is described in Example 6. The method resulted in a solution containing a total halogen content of 22.4% when expressed as Br₂ (10.1% when expressed as Cl₂).

A major benefit of a mixed halogen biocide is in the treatment of contaminated water that exerts a considerable halogen demand. This chemical demand can be satisfied by the less expensive chlorine portion of the composition, permitting more of the bromine portion to be available for microbiological control. Mixed halogen compositions are also safer and more convenient to manufacture than those that are predominantly bromine-based. For example, during the preparation of the latter, the solutions have a tendency to emit deep red, highly erosive and toxic bromine fumes right up until the final addition of the alkaline source. These vapors must be scrubbed from the reaction vessel's headspace in order to eliminate atmosphere release, worker exposure, and to prevent the fumes from entering and damaging expensive vacuum processing equipment. By contrast, the mixed halogen compositions emit hardly any deep red bromine fumes during their manufacture. Thus, the necessity for scrubbing the reaction vessel's headspace is eliminated.

A further significant aspect of compositions based on mixtures of stabilized bromine and chlorine is that in water systems employing long contract times, there may be sufficient time for the N-chlorosulfamate to react with "spent" bromine ion and regenerate N-bromosulfamate according to the following reaction.

[Br-NH-SO₃⁻] + H₂0 = HOBr + NH₂SO3⁻

Upon performing biocidal and oxidative reactions, HOBr reverts to soluble bromine ion. This can enter into reaction with N-chlorosulfamate to generate additional N-bromosulfamate.

[Cl-NH-SO₃⁻] + Br⁻ = [Br-NH-SO₃⁻] + Cl⁻

In this way, the consumer is able to derive the performance benefits of two moles of N-bromosulfamate for the price of one mole of N-bromosulfamate and one mole of N-chlorosulfamate.

Generally, chlorinated compounds display higher water solubility than their brominated counterparts. Further, a mixed halogen composition may be formulated to employ far less sodium bromine salt than an all-bromine solution. Thus, another highly advantageous facet of this invention is that it makes possible the formation of a mixed halogen composition that is lower in solids and is inherently more soluble than those based solely on bromine. This highly water-soluble composition exhibits improved physical stability as it becomes less prone to solid precipitation on storage.

The method preferably includes the following steps. Steps (a) - (g) may be performed sequentially or as otherwise set forth below. Steps (a) and (b) may be performed simultaneously, followed by the remaining steps. Steps (e) and (g) may be combined.

### a. Dispersing solid sulfamic acid in an aqueous phase.

Sulfamic acid displays only moderate solubility in water (14.7g/100g at 0°C). When the amount of sulfamic acid added to water exceeds the solubility limit at any given time temperature some of the solid remains undissolved. Upon stirring the mixture, the sulfamic acid solids are dispersed in the aqueous phase. Preferably, a slurry of between about 25% to about 75% solid sulfamic acid in water is employed, with about 30% to about 40% being the most preferred range.

### b. Forming a solution of the alkali metal or earth alkali metal salt of sulfamic acid in the aqueous phase.

To the stirred dispersion of solid sulfamic acid in water is added an alkaline source in order to form a solution of alkali metal or earth alkali metal salt of sulfamic acid. Any alkaline source may be employed. Examples include, but are not limited to, alkali metal or earth alkali metal carbonates, bicarbonates, oxides and hydroxides. When solutions are preferred, sodium hydroxide or potassium solutions are convenient to use, alone or in combination with each other. A particular preferred alkaline source is 50% NaOH solution. To prevent storage problems in cold climates, the 50% NaOH solution may be diluted with water and used. The alkaline source is introduced to the reaction medium slowly, with stirring and cooling such that the temperature preferably does not exceed 85°F. The amount of 50% NaOH solution employed should preferably be at least sufficient to fully neutralize the sulfamic acid and form sodium sulfamate according to equation (13).

NH₂SO₃H + NaOH → [NH₂SO₃⁻][Na⁺] + H₂O (13)

Even more preferably, a molar excess of 50% NaOH is utilized relative to the amount of sulfamic acid. For reasons that will become apparent in steps (c) and (d), about 1.2 to about 1.8 moles of hydroxide ions are introduced for every mole of sulfamic acid present.

If available, solid alkali metal salts of sulfamic acid may be used in the method of this embodiment. In these circumstances it is only necessary to dissolve the salts in water to make a solution. Preferably, an additional quantity of 50% NaPH is then utilized. For reasons that will become apparent in steps (c) and (d), about 0.2 to about 0.8 moles of hydroxide ions are introduced for every mole of alkali metal salt of sulfamic acid present.

### c. Introducing elemental bromine.

The amount of elemental bromine added depends on the mole ratio of bromine to chlorine that is desired in the final product, and the amount of sulfamic acid used in step (a). For example, a mixed halogen composition containing 80 mole % bromine and 20 mole % chlorine is prepared using 0.66 moles of available chlorine provided by the solid chlorinating agent used in step (d). A mole ratio of about 0.75:1 to about 1.5:1 sulfamic acid to available halogen provided by the sum of the bromine and the solid chlorinating agent is advantageous to the stability of the final product, with about 0.95:1 to about 1.2:1 being the most preferred mole ratio range.

The elemental bromine is dropped into the reaction mixture from above the surface, or it may be introduced subsurface via a dip tube. When the latter is preferred, the dip tube should be positioned so that the Br₂ is introduced to an area of high turbulence, e.g. near the tip of a rotating agitator blade for efficient mixing in the reaction medium. For both subsurface and supersurface addition methods, the Br₂ is added with sufficient mixing and at a rate to void significant phase separation and pooling at the bottom of the reactor.

With adequate mixing, the Br2 introduced to the reactor containing the solution of sodium hydroxide and sodium sulfamate hydrolyzes readily according to reaction (14).

Br₂ + H₂0 → HOBr + HBr (14)

The hypobromous acid formed reacts with sodium sulfamate to form sodium N-bromosulfamate according to reaction (15).

HOBr + [NH₂SO₃⁻][Na⁺]→ [Br-NHSO₃⁻][Na⁺]+H₂0 (15)

The HBr that is generated in reaction (14) immediately undergoes an acid -base neutralization reaction (16) with the excess sodium hydroxide introduced in step (b).

HBr + NaOH → NaBr + H₂0 (16)

When all the excess sodium hydroxide has been consumed by the HBr, additional quantities of base are released from the sodium N-bromosulfamate as follows:

[Br-NHSO₃⁻][Na⁺]→[Br-NHSO₃H]+ NaBr (17)

Reactions (16) and (17) arte strongly exothermic, so the reaction medium is cooled, preferably to below 85°F, to suppress the degradation of sodium N-bromosulfamate and N-bromosulfamic acid.

Neutralization reactions (16) and (17) demonstrate that as the elemental bromine is introduced, the reaction medium undergoes a pH swing from alkaline to acidic conditions. When the addition of elemental bromine is complete, the pH is between about 0.5 and about 9, preferably between about 1.0 and about 4.5. These pH conditions facilitate the chemical reaction of step (d).

### d. Introducing sufficient solid organic or inorganic chlorinating agent to oxidize all or substantially all of the remaining bromine ions into bromine, and to release soluble chlorine into the solution by complexing with sulfamic acid.

Solid inorganic chlorinating agents include, but are not limited to, alkali metal and earth alkali metal hypochlorite salts. Suitable examples include lithium hypochlorite, calcium hypochlorite, and magnesium hypochlorite. Due to its low cost and high available chlorine content, calcium hypochlorite is particularly preferred. The higher strength granular forms of the product (containing about 65-75% available chlorine) are most preferred.

Solid organic chlorinating agents include any organic compound in which one or more chlorine atoms is present in oxidation state +1 and is covalently bound to a nitrogen or phosphorous atom within the same molecule. Suitable examples include, but are not limited to, trichloroisocyanuric acid (TCCA), sodium dichlorisocyanurate (NaDCC), sodium dichlorisocyanurate dihydrate (NaDCC.2H₂O), potassium dichloroisocyanurate, dichloroisocyanuric acid, trichloromelamine, N-chloro-p-touenesulfonamide, N-chloromethanesulfonamide, N-chlorosuccinimide, N,N'-1,3-bromochloro-5,5-dimethylhydantoin, N,N'-1,3-bromochloro-5-ethyl-5-methylhydantoin, and 1,3-dichloro-5,5-dimethylhydantoin. A particularly preferred source of a solid, organic chlorinating agent is trichloroisocyanuric acid (TCCA). Perferably this is used as a fine, dry powder.

The solid chlorinating agent has two functions. First, it oxidises all of the bromide ions released in reactions (16) and (17) into bromine which reacts with the sulfamic acid to form N-bromosulfamic acid. When the solid chlorinating agent is TCCA, it reacts as indicated in reaction (18).

NaBr + [NH₂-SO₃H] + 1/3 TCCA → [Br][NH-SO₃H] +NaCl + 1/3 Cyanuric Acid (18)

Second, the excess solid chlorinating agent releases soluble chlorine into the aqueous solution by complexing with sulfamic acid to form N-chlorosulfamic acid. When the solid chlorinating agent is TCCA, it reacts according to reaction (19).

NH₂-SO₃H + 1/3 TCCA → [Cl][NH-SO₃H] + 1/3 Cyanuric Acid (19)

Although dry powdered TCCA is favoured because of its easy handling characteristics, TCCA powdered wetcake may also be employed. The advantage of using TCCA wetcake is that it may be taken directly from the TCCA-producing reactors and so costs associated with drying of the material are eliminated.

When solid organic or inorganic halogenating agents are used in this fashion all of the Br moieties introduced to the reactor as elemental bromine can materialize as active bromine in the final product. None are wasted as by-product bromine ion salts. Thus, instead of wasting half of the Br moieties as inactive bromine ion, regeneration by, for example, TCCA as described in reaction (18) will ensure that both bromine atoms are utilized as active forms.

### e. Removing any insoluble reaction by-products with a conventional solid-liquid separation technique.

Any suitable solid-liquid separation technique can be employed. Suitable examples include, but are not limited to, centrifugation, clarification, gravity sedimentation, and vacuum filtration. Filtration is a particularly preferred technique for effecting solid-liquid separation.

When the solid organic chlorinating agent is TCCA, cyanuric acid is a reaction by-product that is insoluble in the reaction medium (see reactions (18) and (19)). Filtration of the cyanuric acid (CA) residue is carried out at about pH 1-9, but preferably at about pH 1-6 to maximise its recovery from solution and minimize the amount of bromine vapors that fume from the reaction medium. Upon washing the filtercakes with water top remove the mother liquors, a highly pure CA wetcake is recovered. This can be recycled to other processes to make additional quantities of TCCA, NaDCC, or NaDCC.2H₂O that can be used in the method of the current invention.

If desired, this step can be modified so that the sodium salt of the cyanuric acid is recovered from the reaction medium instead of cyaniric acid. This is accomplished by introducing, before performing the solid-liquid separation, sufficient 50% NaOH to react with cyuanuric acid according to the flowing reaction:

CA + NaOH → NaCA + H₂O (20)

The amount of 50% sodium hydroxide solution employed depends on the amount of solid organic chlorinating agent used in step (d). When TCCA is the solid organic chlorinating agent, sufficient 50% NaOH solution is introduced slowly with mixing and cooling to convert all or substantially all of the cyanuric acid liberated in equations (18) and (19) into its monosodium salt via reaction (20). Monosodium cyanurate is insoluble in the reaction medium at pH<9. As is true of cyanuric acid, monosodium cyanurate can be separated and recycled to other processes in order to make additional quantities of TCCA, NaDCC, or NaDCC.2H₂0 that can be used in the method of the current invention. This is accomplished by performing a solid-liquid separation, as described above, which is done when the pH stabilizes at about 9.

### f. Adding an alkaline source to the reaction mother liquors, such that if the alkaline source is a hydroxide salt, the overall mole ratio of hydroxide ion to sulfamic acid is between about 3:1 and about 5:1, preferably between about 4:1 and about 5:1. This does not include any hydroxide salt that may be used to convert cyanuric acid into its alkali metal or earth alkali metal salt as described in step (e).

Any alkaline source may be employed. Examples include, but are not limited to, alkali metal or earth alkali metal carbonates, bicarbonates, oxides, and hydroxides. When solutions are preferred, sodium hydroxide or potassium hydroxide solutions are convenient to use, alone or in combination with each other. A particularly preferred alkaline source is 50% NaOH solution. To prevent storage problems in cold climates, the 50% NaOH solution may be diluted with water and used. The alkaline source is introduced to the reaction medium slowly, with stirring and cooling, such that the temperature preferably does not exceed 85°F. The purpose is to deprotonate the bromo derivative of sulfamic acid to from the bromo derivate of sodium sulfamate according to reaction (21).

[Br][NH-SO₃H] + NaOH → [Br][NH-SO₃⁻][Na⁺] + H₂O (21)

### g. Removing any further insoluble residues that develop with a conventional solid-liquid separation technique.

As noted above, any suitable solid-liquid separation technique may be employed. Generally, when TCCA is the chlorinating agent, almost 90% of CA reaction by-product is recovered as a highly pure wetcake in the first solid-liquid separation step described in step (e). While not wishing to be bound by theory, it is believed that salts of cyanuric acid are precipitated from the reaction mother liquors upon the addition of alkaline sources. When the alkaline source is, for example, 50% sodium hydroxide solution, the mono-, di-, and trisodium salts of cyanuric acid are precipitated. Although insoluble in the reaction mother liquors, the di- and trisodium salts display exceptional solubility in ordinary water and are thus useful water treating agents in their own right. However, in comparison to the amount of solids recovered in step (e), the amount of solid that may subsequently develop is relatively low, and step (g) may require only a polishing solid-liquid separation, with, for example, a cartridge filter. Moreover, the two solid-liquid separation steps of (e) and (g) may be combined into a single operation performed at step (e).

### Example 1

This example describes the preparation of a mixed halogen solution that was formulated to contain a theoretical 80 mole % bromine and 20 mole % chlorine.

Deionized water (138.2 ml) was introduced to a four-necked round bottom flask and solid sulfamic acid (85.0 g) was added. The slurry was stirred and 50% NaOH (89.0 g) was slowly added as the flask was chilled in an ice bath to keep the temperature of the flask contents at around 74°F. When the addition was complete, the pH of the solution was measured to be 13.2. Using a dropping funnel, elemental bromine (46.8 g) was dispersed at a rate of about one drop per second to the reaction medium, also with stirring and cooling to maintain a reaction temperature of less than 68°F. When the bromine addition was complete, the pH of the reaction medium was measured to be 2.16. A single charge of powered trichloroisocyariuric acid (90.54% available Cl₂) (34.6 g) was then delivered to the reaction medium through one of the necks of the flask. Stirring and cooling continued as normal as a fine powdery precipitate of cyanuric acid developed. After 10 minutes, the headspace in the reactor became devoid of the dark red bromine fumes that are apparent when making an all-bromine solution. After that, the cyanuric acid precipitate was then removed by vacuum filtration and the filter cake was washed with two bed volumes of deionized water that were not combined with mother liquors. The wetcake was placed in an oven set at 125°F for drying overnight. Using a dropping funnel, additional 50% NaOH (126.8 g) was added to the filtrate, again with cooling and stirring, such that the temperature remained at 74°F. Any solids that precipitated from solution were removed by vacuum filtration immediately upon completing the addition of the 50% NaOH. Iodometric titration of the resultant golden yellow filtrate yielded a solution with a total halogen content of 22% when expressed as Br₂ (10.1 % when expressed as Cl₂) which corresponded to a yield of 97.2% based on the sum of the bromine and TCCA charges to the reactor. The solution possessed a hydroxide ion to hydrogen ion source (sulfamic acid plus Br₂) mole ratio of 2.3:1. The weight of the dry solids removed in the first filtration indicated that 92.2% of the cyanuric acid had been recovered.

## Claims

1. A method of preparing a bromine- and chlorine-containing liquid, comprising:
(a) combining solid sulfamic acid, water, and a first alkaline source to form a solution of the salt of sulfamic acid, wherein said alkaline source is selected from the group consisting of alkali metal hydroxide and earth alkali metal hydroxide;
(b) adding elemental bromine to said solution, releasing bromide ions into said solution;
(c) adding a sufficient amount of a solid organic chlorinating agent to said solution to oxidise all of said bromide ions into bromine and to release soluble chlorine into said solution;
(d) conducting a solid-liquid separation;
(e) adding a second alkaline source, wherein said alkaline source is selected from the group consisting of alkali metal hydroxide and earth alkali metal hydroxide; and
(f) forming a bromine- and chlorine-containing liquid, wherein the amounts of said solid sulfamic acid, water, first and second alkaline sources, and elemental bromine are such that said bromine- and chlorine-containing liquid has an active ingredient concentration of greater than 18% expressed as bromine or 8% expressed as chlorine, and further, wherein said bromine- and chlorine-containing liquid has a mole ratio of said sulfamic acid to available halogen provided by said elemental bromine added in step (b) and said solid organic chlorinating agent added in step (c) of between about 0.95:1 and about 1.2:1.

2. The method of claim 1, further comprising after step (e), conducting a second solid-liquid separation.

3. The method of claim 1, wherein the mole ratio of hydroxide ion to sulfamic acid is between about 1.2:1 and about 1.8:1.

4. The method of claim 1, wherein in step (a), said solid sulfamic acid is first dispersed in said water, followed by the addition of said first alkaline source.

5. The method of claim 1, wherein said organic chlorinating agent is selected from the group consisting of trichloroisocyanuric acid, sodium dichloroisocyanurate, sodium dichloroisocyanurate dihydrate, potassium dichloroisocyanurate, dichloioisocyanuric acid, trichloromelamine, N-chloro-p-toluenesulfonamide, N-chloromethanesulfonamide, N-chlorosuccinimide, N,N'-1,3-bromochloro-5,5-dimethylhydantoin, N,N'-1,3-bromochloro-5-ethyl-5-methylhydantoin, and 1,3-dichloro-5,5-dimethylhydantoin.

6. A bromine- and chlorine-containing liquid having an active ingredient concentration of greater than 18% when expressed as bromine or 8% expressed as chlorine, obtainable by the method of claim 1.

## Patentansprüche

1. Verfahren zur Herstellung einer brom- und chlorhaltigen Flüssigkeit, das Folgendes beinhaltet:
(a) Kombinieren von fester Sulfaminsäure, Wasser und einer festen Alkaliquelle zum Bilden einer Lösung des Sulfaminsäuresalzes, wobei die genannte Alkaliquelle aus der Gruppe bestehend aus Alkalimetallhydroxid und Erdalkalimetallhydroxid ausgewählt ist;
(b) Zugeben von elementarem Brom zu der genannten Lösung, Freisetzen von Bromidionen in die genannte Lösung;
(c) Zugeben einer ausreichenden Menge eines festen organischen Chlorierungsmittels zu der genannten Lösung, um alle genannten Bromidionen zu Brom zu oxidieren und lösliches Chlor in die genannte Lösung freizusetzen;
(d) Durchführen einer Fest-Flüssig-Trennung;
(e) Zugeben einer zweiten Alkaliquelle, wobei die genannte Alkaliquelle aus der Gruppe bestehend aus Alkalimetallhydroxid und Erdalkalimetallhydroxid ausgewählt ist; und
(f) Bilden einer brom- und chlorhaltigen Flüssigkeit, wobei die Mengen der genannten festen Sulfaminsäure, an Wasser, an erster und zweiter Alkaliquelle und an elementarem Brom derart sind, dass die genannte brom- und chlorhaltige Flüssigkeit eine Wirkstoffkonzentration von mehr als 18 % aufweist, ausgedrückt als Brom, oder 8 %, ausgedrückt als Chlor, und wobei ferner die genannte brom- und chlorhaltige Flüssigkeit ein Molverhältnis zwischen der genannten Sulfaminsäure und verfügbarem Halogen, bereitgestellt durch das genannte in Schritt (b) zugegebene elementare Brom und das genannte in Schritt (c) zugegebene feste organische Chlorinierungsmittel, zwischen 0,95:1 und etwa 1,2:1 hat.

2. Verfahren nach Anspruch 1, das ferner nach Schritt (e) das Durchführen einer zweiten Fest-Flüssig-Trennung beinhaltet.

3. Verfahren nach Anspruch 1, wobei das Molverhältnis zwischen Hydroxidionen und Sulfaminsäure zwischen etwa 1,2:1 und etwa 1,8:1 liegt.

4. Verfahren nach Anspruch 1, wobei in Schritt (a) die genannte feste Sulfaminsäure zunächst in dem genannten Wasser dispergiert wird, gefolgt von der Zugabe der genannten ersten Alkaliquelle.

5. Verfahren nach Anspruch 1, wobei das genannte organische Chlorierungsmittel aus der Gruppe bestehend aus Trichlorisocyanursäure, Natrium-dichlorisocyanurat, Natrium-dichlorisocyanurat-dihydrat, Kalium-dichlorisocyanurat, Dichlorisocyanursäure, Trichlormelamin, N-Chlor-p-toluolsulfonamid, N-Chlormethansulfonamid, N-Chlorsuccinimid, N,N'-1,3-Bromchlor-5,5-dimethylhydantoin, N,N'-1,3-Bromchlor-5-ethyl-5-methylhydantoin und 1,3-Dichlor-5,5-dimethylhydantoin ausgewählt ist.

6. Brom- und chlorhaltige Flüssigkeit mit einer Wirkstoffkonzentration von mehr als 18 %, wenn ausgedrückt als Brom, oder von 8 %, ausgedrückt als Chlor, erhältlich mit dem Verfahren nach Anspruch 1.

## Revendications

1. Méthode de préparation d'un liquide contenant du brome et du chlore, comprenant :
(a) la combinaison d'acide sulfamique solide, d'eau et d'une première source d'alcali pour former une solution de sel d'acide sulfamique, ladite source d'alcali étant sélectionnée parmi le groupe consistant en un hydroxyde de métal alcalin et un hydroxyde de métal alcalino-terreux ;
(b) l'addition de brome élémentaire à ladite solution, libérant des ions bromure dans ladite solution ;
(c) l'addition d'une quantité suffisante d'un agent chlorant organique solide à ladite solution pour oxyder la totalité desdits ions bromure en brome et pour libérer du chlore soluble dans ladite solution ;
(d) la réalisation d'une séparation solide-liquide ;
(e) l'addition d'une seconde source d'alcali, ladite source d'alcali étant sélectionnée parmi le groupe consistant en un hydroxyde de métal alcalin et un hydroxyde de métal alcalino-terreux, et enfin
(f) la formation d'un liquide contenant du brome et du chlore, les quantités desdits acide sulfamique solide, eau, première et seconde source d'alcali et brome élémentaire étant telles que ledit liquide contenant du brome et du chlore ait une concentration en principe actif supérieure à 18 % exprimée en brome ou à 8 % exprimée en chlore, et en outre, ledit liquide contenant du brome et du chlore ayant un rapport molaire entre ledit acide sulfamique et l[es] halogène[s] disponible[s] fourni[s] par ledit brome élémentaire ajouté à l'étape (b) et ledit agent chlorant organique solide ajouté à l'étape (c) entre environ 0,95 à 1 et environ 1,2 à 1.

2. Méthode selon la revendication 1, comprenant en outre après l'étape (e), la réalisation d'une seconde séparation solide-liquide.

3. Méthode selon la revendication 1, le rapport molaire ions hydroxyde/acide sulfamique étant compris entre 1,2 à 1 et 1,8 à 1.

4. Méthode selon la revendication 1, où dans l'étape (a), ledit acide sulfamique solide est d'abord dispersé dans ladite eau, opération suivie par l'addition de ladite première source d'alcali.

5. Méthode selon la revendication 1, ledit agent chlorant organique étant sélectionné parmi le groupe consistant en l'acide trichloroisocyanurique, le dichloroisocyanurate de sodium, le dichloroisocyanurate de sodium, le dichloroisocyanurate de sodium dihydraté, le dichloroisocyanurate de potassium, l'acide dichloroisocyanurique, la trichloromélamine, le N-chloro-p-toluènesulfonamide, le N-chlorométhanenesulfonamide, le N-chlorosuccinimide, la N,N'-1,3-bromochloro-5,5-diméthylhydantoïne, la N,N'-1,3-bromochloro-5-éthyl-5-méthylhydantoïne et la 1,3-dichloro-5,5-diméthylhydantoïne.

6. Liquide contenant du brome et du chlore ayant une concentration en principe actif supérieure à 18 % exprimée en brome ou à 8 % exprimée en chlore, pouvant être obtenue par la méthode de la revendication 1.
